# EUROPÄISCHE PATENTSCHRIFT

(11) **EP 3 855 024 B1**
(45) Veröffentlichungstag und Bekanntmachung des Hinweises auf die Patenterteilung: **15.11.2023**
(21) Anmeldenummer: 20215066.0
(22) Anmeldetag: 17.12.2020
(51) Int. Cl.: F01P 5/06, F04D 29/00

(54) **ABSAUGANORDNUNG FÜR EINEN ZENTRIFUGALLUFTFILTER**
SUCTION ARRANGEMENT FOR A CENTRIFUGAL AIR FILTER
AGENCEMENT D'ASPIRATION POUR UN FILTRE À AIR CENTRIFUGE

(30) Priorität: 27.01.2020 DE 102020200950
(43) Veröffentlichungstag der Anmeldung: 28.07.2021
(73) Patentinhaber: Deere & Company, Moline, IL 61265 (US)
(72) Erfinder: YUEN, Ming Parker, 68163 Mannheim (DE); BERG, Alexander, 68163 Mannheim (DE); SANANIKONE, Phouphadeth, 68163 Mannheim (DE)
(74) Vertreter: Dehnhardt, Florian Christopher

(56) Entgegenhaltungen:
- EP-A1- 3 736 433
- EP-A2- 2 136 066
- US-A1- 2014 090 800

## Beschreibung

Die Erfindung betrifft eine Absauganordnung für einen Zentrifugalluftfilter.

Derartige Zentrifugalluftfilter finden typischerweise als Grobfilter zur Vorreinigung der Ladeluft von Dieselmotoren, wie zum Beispiel in US2014090800A1 offenbart, die mit einem Turbolader ausgestattetet sind, Verwendung. Hierzu umfasst der Zentrifugalluftfilter eine Vielzahl von Einzelabscheidern, die einen hindurchtretenden Luftstrom in eine Wirbelbewegung versetzen, sodass im Luftstrom enthaltene Grobpartikel aufgrund der dabei verursachten Zentrifugalkräfte in einen die Einzelabscheider umgebenden Abscheidebereich geschleudert werden. In den Abscheidebereich mündet ein an einem umgebenden Filtergehäuse vorgesehener Anschlussstutzen, an dem ein Unterdruck aufbaubar ist, sodass sich die im Abscheidebereich befindlichen Grobpartikel nach außen absaugen lassen. Der Aufbau des Unterdrucks erfolgt beispielsweise im Bereich einer von einem Kühlluftstrom durchsetzten Lüfterhutze, wobei ein mit dem Anschlussstutzen des Zentrifugalluftfilters verbundener Saugschnorchel in einen Ansaugbereich eines innerhalb der Lüfterhutze rotierenden Lüfterrads mündet. Da der Saugschnorchel dabei üblicherweise in den Kühlluftstrom hineinragt, kann es zu einer unerwünschten Abschattung stromaufwärts liegender Wärmetauscher und damit zu einer entsprechenden Verschlechterung der Wärmeabfuhr kommen.

Es ist daher Aufgabe der vorliegenden Erfindung, eine hinsichtlich der Nutzung eines Kühlluftstroms zur Unterdruckerzeugung verbesserte Absauganordnung der eingangs genannten Art anzugeben.

Diese Aufgabe wird durch eine Absauganordnung für einen Zentrifugalluftfilter mit den Merkmalen des Patentanspruchs 1 gelöst.

Die Absauganordnung für einen Zentrifugalluftfilter umfasst einen Axiallüfter zur Erzeugung eines Kühlluftstroms sowie eine Venturidüse mit einem Strömungsrohr und einem in einen Einschnürungsbereich innerhalb des Strömungsrohrs einmündenden Ansaugstutzen, wobei das Strömungsrohr in Abströmrichtung des Axiallüfters derart von dem Kühlluftstrom durchsetzt wird, dass in dem Ansaugstutzen ein Unterdruck hervorgerufen wird. Da die Venturidüse stromabwärts des Axiallüfters untergebracht ist, ist eine unerwünschte Abschattung stromaufwärts liegender Wärmetauscher sowie eine damit einhergehende Verschlechterung der Wärmeabfuhr von vornherein ausgeschlossen.

Vorteilhafte Ausgestaltungen der erfindungsgemäßem Absauganordnung gehen aus den Unteransprüchen hervor.

Vorzugsweise ist die Venturidüse in einem Peripheriebereich des Axiallüfters angeordnet. Die Strömungsgeschwindigkeit des mittels des Axiallüfters erzeugten Kühlluftstroms und damit des im Einschnürungsbereich der Venturidüse aufbaubaren Unterdrucks ist hier am größten.

Um die Montage der Absauganordnung zu vereinfachen, besteht die Möglichkeit, dass die Venturidüse baulich in eine den Axiallüfter umgebende Lüfterhutze integriert ist. Die Absauganordnung kann in diesem Fall gemeinsam mit der Lüfterhutze eine in sich abgeschlossene Baueinheit bilden, die sich in einem einzigen Arbeitsgang als Block montieren lässt.

Insbesondere kann die Venturidüse auch einstückiger Bestandteil der Lüfterhutze sein. Die so gebildete Baueinheit ist beispielsweise als Kunststoffspritzgussteil hergestellt.

Die erfindungsgemäße Absauganordnung für einen Zentrifugalluftfilter wird im Folgenden anhand der beigefügten Zeichnungen näher erläutert. Hierbei sind übereinstimmende bzw. bezüglich ihrer Funktion vergleichbare Komponenten mit denselben Bezugszeichen gekennzeichnet. Es zeigen:
- Fig. 1: ein Luftfiltersystem in einem Motorraum eines als landwirtschaftlicher Traktor ausgebildeten Nutzfahrzeugs, und
- Fig. 2: eine schematische Schnittansicht eines Ausführungsbeispiels der erfindungsgemäßen Absauganordnung für einen von einem Luftfiltersystem gemäß Fig. 1 umfassten Zentrifugalluftfilter.

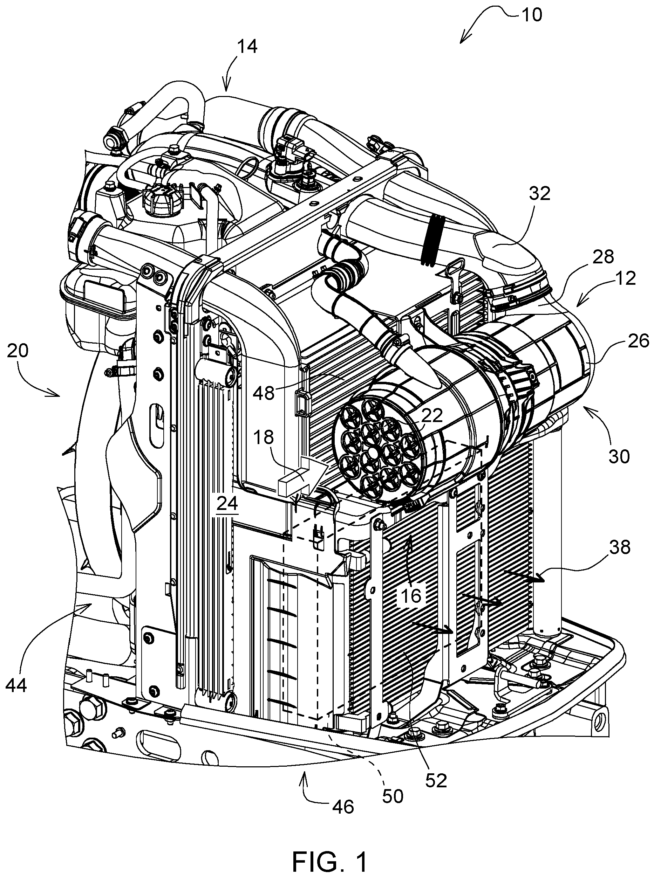

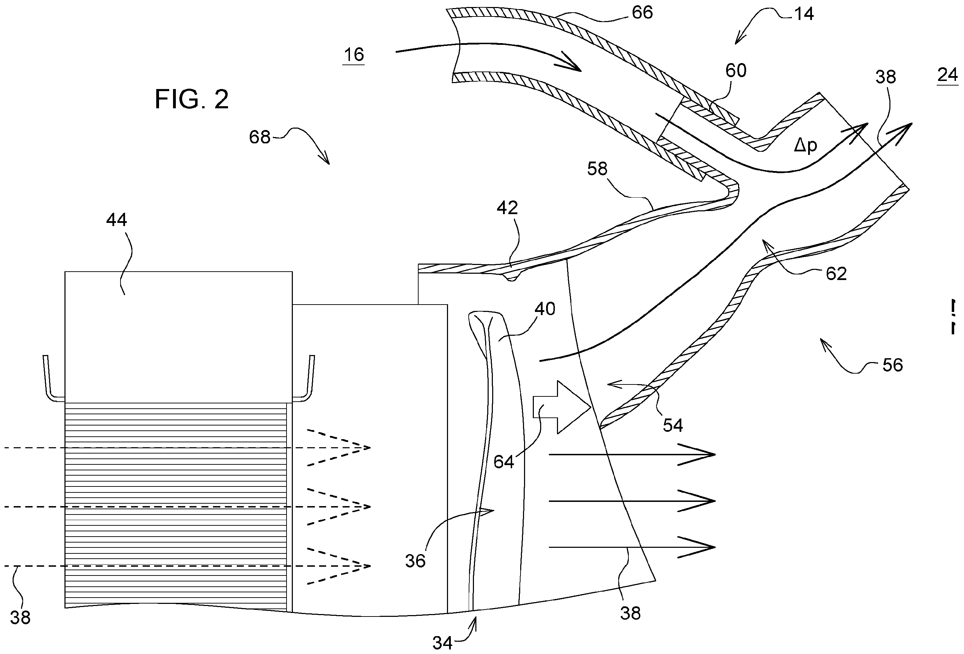

Fig. 1 zeigt ein in einem Motorraum 10 eines Nutzfahrzeugs untergebrachtes Luftfiltersystem 12, das mit einer in Fig. 2 dargestellten Absauganordnung 14 zum Betrieb eines Zentrifugalluftfilters 16 ausgestattet ist. Die Sicht auf die Absauganordnung 14 ist in Fig. 1 durch vorgelagerte Komponenten verdeckt, sodass diesbezüglich auf Fig. 2 verwiesen sei. Das Luftfiltersystem 12 dient hierbei der Reinigung eines Ladeluftstroms 18 eines als aufgeladener Dieselmotor ausgebildeten Verbrennungsmotors 20 des Nutzfahrzeugs.

Bei dem Nutzfahrzeug handelt es sich beispielhaft um einen (nicht gezeigten) landwirtschaftlichen Traktor. Alternativ kann das Nutzfahrzeug auch als Fahrzeug beliebiger anderer Bauart, insbesondere auch als Bau- oder Forstfahrzeug ausgebildet sein.

Das Luftfiltersystem 12 weist einen Zentrifugalluftfilter 16 zur Vorreinigung von aus der Umgebung angesaugter Luft auf. Der Zentrifugalluftfilter 16 besteht aus einer Vielzahl von Einzelabscheidern 22, die die aus der Umgebung 24 angesaugte Luft derart in eine Wirbelbewegung versetzen, dass darin enthaltene Grobpartikel aufgrund der verursachten Zentrifugalkräfte in einen die Einzelabscheider 22 umgebenden Abscheidebereich geschleudert werden. In den Abscheidebereich mündet ein an einem umgebenden Filtergehäuse 26 vorgesehener Anschlussstutzen 28, an dem mittels der Absauganordnung 14 ein Unterdruck Δp aufbaubar ist, sodass sich die im Abscheidebereich befindlichen Grobpartikel zum Zwecke ihrer Entfernung aus dem Zentrifugalluftfilter 16 nach außen absaugen lassen.

Ein dem Zentrifugalluftfilter 16 nachgeschalteter Feinfilter 30 reinigt die aus dem Zentrifugalluftfilter 16 austretende Luft von verbleibenden Feinpartikeln. Der als auswechselbare Filterpatrone ausgebildete Feinfilter 30 ist gemeinsam mit dem Zentrifugalluftfilter 16 in dem Filtergehäuse 26 untergebracht. Die solchermaßen gereinigte Luft wird anschließend über eine Schlauchleitung 32 einem Turbolader des Dieselmotors 20 als Ladeluft zugeführt.

Gemäß Fig. 2 umfasst die Absauganordnung 14 des Weiteren einen Axiallüfter 34 mit einem Lüfterrad 36, das sich zur Erzeugung eines Kühlluftstroms 38 über einen Riemenantrieb des Dieselmotors 20 oder einen separaten elektrischen Antriebsmotor in Drehung versetzen lässt. Von dem Axiallüfter 34 bzw. Lüfterrad 36 ist in Fig. 2 lediglich ein einzelner Lüfterflügel 40 stellvertretend dargestellt. Das Lüfterrad 36 ist von einer umlaufenden Lüfterhutze 42 umgeben, die der Führung des Kühlluftstroms 38 innerhalb des Motorraums 10 dient. Erfindungsgemäß wird der Kühlluftstrom 38 durch einen stromaufwärts liegenden Wärmetauscher 44 hindurchgesogen, der beispielsweise Bestandteil eines Hochtemperaturkühlsystems des Dieselmotors 20 ist. Daneben sind gemäß Fig. 1 weitere Wärmetauscher 46, wie zum Beispiel ein Ladeluftkühler 48, ein Getriebeölkühler 50 sowie ein Klimakondensator 52, vorgesehen, die gemeinsam ein Kühlerpaket bilden, das sich innerhalb des Motorraums 10 hinter einem Kühlergrill einer umgebenden Motorhaube befindet (nicht gezeigt).

Wie in Fig. 2 zu erkennen ist, erfolgt die Erzeugung des Unterdrucks Δp mittels einer in einem Peripheriebereich 54 des Axiallüfters 34 angeordneten Venturidüse 56. Die Venturidüse 56 besteht aus einem Strömungsrohr 58 und einem Ansaugstutzen 60, der in einen Einschnürungsbereich 62 innerhalb des Strömungsrohrs 58 einmündet. Das Strömungsrohr 58 wird in Abströmrichtung 64 des Axiallüfters 34 derart von dem Kühlluftstrom 38 durchsetzt, dass in dem Ansaugstutzen 60 ein Unterdruck gegenüber der Umgebung 24 hervorgerufen wird. Der Ansaugstutzen 60 steht hierbei über einen Verbindungsschlauch 66 mit dem Anschlussstutzen 28 am Filtergehäuse 26 in Verbindung, sodass die im Zentrifugalluftfilter 16 abgeschiedenen Grobpartikel unter der Wirkung des aufgebauten Unterdrucks Δp abgesaugt und im Einschnürungsbereich 62 des Strömungsrohrs 58 vom Kühlluftstrom 38 in die Umgebung 24 mitgerissen werden.

Da die Venturidüse 56 stromabwärts des Axiallüfters 34 untergebracht ist, ist eine unerwünschte Abschattung der stromaufwärts liegenden Wärmetauscher 44, 46 sowie eine damit einhergehende Verschlechterung der Wärmeabfuhr von vornherein ausgeschlossen.

Um die Montage der Absauganordnung 14 zu vereinfachen, ist die Venturidüse 56 baulich in die den Axiallüfter 34 umgebende Lüfterhutze 42 integriert. Die Absauganordnung 14 bildet in diesem Fall gemeinsam mit der Lüfterhutze 42 eine in sich abgeschlossene Baueinheit 68, die sich in einem einzigen Arbeitsgang als Block montieren lässt. Die Venturidüse 56 ist dabei einstückiger Bestandteil der Lüfterhutze 42. Die so gebildete Baueinheit 68 ist als Kunststoffspritzgussteil hergestellt.

Der Vollständigkeit halber sei angemerkt, dass der Zentrifugalluftfilter 16 nicht zwangsläufig zur Vorreinigung der Ladeluft eines Verbrennungsmotors dienen muss. Vielmehr kann dieser auch Bestandteil eines Luftfiltersystems einer Fahrzeugkabinenlüftung sein.

## Patentansprüche

1. Absauganordnung für einen Zentrifugalluftfilter, umfassend einen Wärmetäuscher (44), einen Axiallüfter (34) zur Erzeugung eines Kühlluftstroms (38) sowie eine Venturidüse (56) mit einem Strömungsrohr (58) und einem in einen Einschnürungsbereich (62) innerhalb des Strömungsrohrs (58) einmündenden Ansaugstutzen (60), wobei das Strömungsrohr (58) in Abströmrichtung (64) des Axiallüfters (34) derart von dem Kühlluftstrom (38) durchsetzt wird, dass in dem Ansaugstutzen (60) ein Unterdruck (Δp) hervorgerufen wird, **dadurch gekennzeichnet, dass** der Kühlluftstrom (38) durch den stromaufwärts liegenden Wärmetauscher (44) hindurchgesogen wird, wobei die Venturidüse (56) stromabwärts sowohl des Axiallüfters (34) als auch des Wärmetauschers (44) untergebracht ist.

2. Absauganordnung nach Anspruch 1, **dadurch gekennzeichnet, dass** die Venturidüse (56) in einem Peripheriebereich (54) des Axiallüfters (34) angeordnet ist.

3. Absauganordnung nach Anspruch 1 oder 2, **dadurch gekennzeichnet, dass** die Venturidüse (56) baulich in eine den Axiallüfter (34) umgebende Lüfterhutze (42) integriert ist.

4. Absauganordnung nach Anspruch 3, **dadurch gekennzeichnet, dass** die Venturidüse (56) einstückiger Bestandteil der Lüfterhutze (42) ist.

5. Nutzfahrzeug, insbesondere landwirtschaftlicher Traktor, mit einem Luftfiltersystem (12) zur Reinigung eines Ladeluftstroms (18) eines Verbrennungsmotors (20), wobei das Luftfiltersystem (12) einen Zentrifugalluftfilter (16) zur Vorabscheidung von Grobpartikeln im Ladeluftstrom (18) sowie eine Absauganordnung (14) nach wenigstens einem der Ansprüche 1 bis 4 zur Entfernung vorabgeschiedener Grobpartikel aus dem Zentrifugalluftfilter (16) aufweist.

## Claims

1. Suction arrangement for a centrifugal air filter, comprising a heat exchanger (44), an axial fan (34) for generating a cooling airflow (38), as well as a venturi nozzle (56) having a flow tube (58) and an induction port (60) which opens into a constriction region (62) within the flow tube (58), wherein the flow tube (58) in the outflow direction (64) of the axial fan (34) is penetrated by the cooling airflow (38) in such a manner that a negative pressure (Δp) is caused in the induction port (60), **characterized in that** the cooling airflow (38) is suctioned through the upstream heat exchanger (44), wherein the venturi nozzle (56) is accommodated downstream of the axial fan (34) as well as downstream of the heat exchanger (44).

2. Suction arrangement according to Claim 1, **characterized in that** the venturi nozzle (56) is disposed in a peripheral region (54) of the axial fan (34).

3. Suction arrangement according to Claim 1 or 2, **characterized in that** the venturi nozzle (56) in terms of construction is integrated in a fan casing (42) that surrounds the axial fan (34).

4. Suction arrangement according to Claim 3, **characterized in that** the venturi nozzle (56) is an integral part of the fan casing (42).

5. Commercial vehicle, in particular agricultural tractor, having an air filter system (12) for cleaning a charge airflow (18) of an internal combustion engine (20), wherein the air filter system (12) has a centrifugal air filter (16) for the preliminary separation of coarse particles in the charge airflow (18), as well as a suction arrangement (14) according to at least one of Claims 1 to 4 for removing pre-separated coarse particles from the centrifugal air filter (16).

## Revendications

1. Agencement d'aspiration pour un filtre à air centrifuge, comprenant un échangeur de chaleur (44), un ventilateur axial (34) pour la production d'un courant d'air de refroidissement (38) ainsi qu'une buse venturi (56) avec un tube d'écoulement (58) et une tubulure d'aspiration (60) débouchant dans une zone d'étranglement (62) à l'intérieur du tube d'écoulement (58), le tube d'écoulement (58) étant traversé par le courant d'air de refroidissement (38) dans la direction de courant sortant (64) du ventilateur axial (34) de telle sorte qu'une dépression (Δp) est générée dans la tubulure d'aspiration (60), **caractérisé en ce que** le courant d'air de refroidissement (38) est aspiré à travers l'échangeur de chaleur (44) situé en amont, la buse venturi (56) étant logée en aval à la fois du ventilateur axial (34) et de l'échangeur de chaleur (44).

2. Agencement d'aspiration selon la revendication 1, **caractérisé en ce que** la buse venturi (56) est agencée dans une zone périphérique (54) du ventilateur axial (34) .

3. Agencement d'aspiration selon la revendication 1 ou 2, **caractérisé en ce que** la buse venturi (56) est intégrée structurellement dans un capot de ventilateur (42) entourant le ventilateur axial (34).

4. Agencement d'aspiration selon la revendication 3, **caractérisé en ce que** la buse venturi (56) fait partie intégrante du capot de ventilateur (42).

5. Véhicule utilitaire, notamment tracteur agricole, avec un système de filtration d'air (12) pour la purification d'un courant d'air de suralimentation (18) d'un moteur à combustion interne (20), le système de filtration d'air (12) présentant un filtre à air centrifuge (16) pour la pré-séparation de particules grossières dans le courant d'air de suralimentation (18) ainsi qu'un agencement d'aspiration (14) selon au moins l'une quelconque des revendications 1 à 4 pour l'élimination de particules grossières pré-séparées du filtre à air centrifuge (16).
